# EUROPÄISCHE PATENTSCHRIFT

(11) **EP 0 777 169 B1**
(45) Veröffentlichungstag und Bekanntmachung des Hinweises auf die Patenterteilung: **02.02.2000**
(21) Anmeldenummer: 96118343.1
(22) Anmeldetag: 15.11.1996
(51) Int. Cl.: G05D 23/19

(54) **Leistungs-Regeleinrichtung für eine Strahlungsbeheizung**
Power controlling device for a radiation heating device
Dispositif de régulation de puissance pour un élément de chauffage par rayonnement

(30) Priorität: 30.11.1995 DE 19544652
(43) Veröffentlichungstag der Anmeldung: 04.06.1997
(73) Patentinhaber: AKO-Werke GmbH & Co. KG, 88239 Wangen im Allgäu (DE)
(72) Erfinder: Wauer, Roman-Hartmut, 88353 Kisslegg (DE); Hecht, Josef, Dipl.-Ing., 88416 Erlenmoos (DE)
(74) Vertreter: Hofmann, Gerhard, Dipl.-Ing. Patentassessor

(56) Entgegenhaltungen:
- DE-C- 3 342 416
- US-A- 4 740 664
- US-A- 5 442 926
- PATENT ABSTRACTS OF JAPAN vol. 95, no. 001 & JP 07 020948 A (SINTOKOGIO LTD), 24.Januar 1995,
- PROCEEDINGS OF THE ANNUAL CONFERENCE OF THE INDUSTRIAL ELECTRONICS SOCIETY. (IECON), PHILADELPHIA, NOV. 6 - 10, 1989, Bd. 1 OF 4, 6.November 1989, INSTITUTE OF ELECTRICAL AND ELECTRONICS ENGINEERS, Seiten 721-725, XP000130579 KIYOSHI OHISHI: "ROBUST TEMPERATURE CONTROL OF THERMOSTATIC OVEN BASED ON ADAPTIVE AND FUZZY ALGORITHM"
- PROCEEDINGS OF THE CONFERENCE ON FUZZY SYSTEMS, ORLANDO, JUNE 26 - 29, 1994, Bd. 2, 26.Juni 1994, INSTITUTE OF ELECTRICAL AND ELECTRONICS ENGINEERS, Seiten 825-830, XP000518339 GWALTNEY D A ET AL: "FUZZY LOGIC CONTROL OF WIND TUNNEL TEMPERATURE PROCESSES"

## Beschreibung

Die Erfindung betrifft eine Leistungs-Regeleinrichtung für eine Strahlungsbeheizung mit einem die Temperatur eines Kochfeldes erfassenden Temperaturfühler und einem Vorwähler.

In der DE 33 15 438 A1 ist eine Strahlungsbeheizung einer Kochplatte beschrieben. Einem Kochfeld sind drei verschiedene Heizspiralen zugeordnet, die zum Einstellen unterschiedlicher Leistungen mittels eines Siebentaktschalters steuerbar sind. Eine Temperaturreglung ist nicht vorgesehen. Ein Temperaturfühler dient lediglich zum Schalten eines Temperaturbegrenzers.

In der DE 33 15 438 A1 ist auch eine Kochplattenbeheizung erwähnt, die mit einem Leistungssteuergerät arbeitet. Dieses beaufschlagt den Heizkörper mit einstellbaren unterschiedlichen Impuls-Pausen-Verhältnissen.

Ein Temperaturregler für Elektrokochplatten ist aus der DE 28 50 389 B2 bekannt. Es handelt sich dort um einen Zweipunktregler, der kurz vor Erreichen einer eingestellten Solltemperatur die Beheizung abschaltet.

In der noch nicht veröffentlichten deutschen Patentanmeldung 195 22 748 ist eine Regeleinrichtung für eine Kochplatten-Strahlungsbeheizung beschrieben. Um mit einem stabförmigen Ausdehnungsfühler, der der Sicherheitsabschaltung dient, gleichzeitig die Funktion eines Energiereglers zu erhalten, liegt der Ausdehnungsfühler im Einflußbereich eines Zusatzheizkörpers. Durch eine Steuerschaltung ist die Leistung des Zusatzheizkörpers mittels eines Temperaturwählers einstellbar.

Aus der DE 41 11 784 A1 ist ein elektronischer Regler für Elektrowärmegeräte bekannt, der mit einem Mikrocontroller ausgerüstet ist, welcher Prozeßdaten für die einzelnen Regelfunktionen fest programmiert enthält.

Aus der US 4,740,664 ist bekannt, für die Temperaturbegrenzung von strahlungsbeheizten Kochfeldern die zeitlichen Änderung der Ist-Temperatur des Kochfeldes heranzuziehen.

Aufgabe der Erfindung ist es, eine Leistungs-Regeleinrichtung der eingangs genannten Art vorzuschlagen, die der Strahlungsbeheizung in Abhängigkeit von der thermischen Belastung - durch Kochgeschirr und im Leerlauf - gerade die Energiemenge zuführt, die für die Einhaltung eines vom Benutzer gewählten Temperaturniveaus nötig ist.

Erfindungsgemäß ist obige Aufgabe bei einer Leistungs-Regeleinrichtung der eingangs genannten Art durch die Merkmale des kennzeichnenden Teils des Anspruchs 1 gelöst.

Dadurch werden im Betrieb ständig die zeitliche Temperaturänderung (Temperaturanstieg oder Temperaturabfall) des Kochfeldes und die Temperaturabweichung der Isttemperatur von dem Einstellwert des Vorwählers ermittelt. Aus der Wertematrix wird in Kombination der jeweiligen Temperaturänderung und der Temperaturabweichung ein dort gespeicherter Regelwert ausgelesen, der am besten geeignet sind, der Temperaturänderung bzw. der Temperaturabweichung entgegenzuwirken. Dabei wird von selbst die jeweilige Belastung der Strahlungsbeheizung erfaßt, die sich in einer entsprechenden Temperaturänderung äußert. Wird beispielsweise ein kaltes Kochgeschirr auf das warme Kochfeld gestellt, dann tritt ein Temperaturabfall auf, der zur Auswahl eines hohen Regelwertes führt, wodurch die Strahlungsbeheizung auf eine hohe Leistung gestellt wird und zwar unabhängig von der jeweiligen Einstellung des Vorwählers. Wird beispielsweise das Kochfeld im Leerlauf, d.h. ohne Kochgeschirr, betrieben, dann tritt nur ein geringer zeitlicher Temperaturabfall auf, so daß ein entsprechend kleiner Regelwert ausgewählt wird; und zwar ebenfalls unabhängig von der jeweiligen Einstellung des Vorwählers.

Insgesamt wird also nur diejenige Energie zugeführt, die vom System Kochfeld-Kochgeschirr auch abgeführt wird.

In gleicher Weise wird auch die Verstellung des Vorwählers ausgewertet. Wird er beispielsweise hochgestellt (Solltemperatur höher als Isttemperatur), dann wird ein entsprechend höherer Regelwert ausgelesen, wird er zurückgestellt (Sollwert kleiner als Isttemperatur), wird ein entsprechend kleinerer Regelwert ausgelesen, wobei die Auswahl der Regelwerte über die Wertematrix auch von dem momentanen Temperaturverlauf abhängt.

Die mögliche maximale Leistung einer Strahlungsbeheizung kann höher sein als ihr Nominalwert. Beträgt die Nominalleistung beispielsweise 1200 W, dann ist nach dem Stand der Technik dies der größte Wert, den der Benutzer einstellen kann. Liegt die mögliche Maximalleistung im Einzelfall, beispielsweise bei 230 V bei 1500 W, höher, dann bleibt dieser Leistungsüberschuß (330 W) nach dem Stand der Technik ungenutzt. Die beschriebene Regeleinrichtung nutzt diesen Leistungsüberschuß zum schnellen Aufglühen der Strahlungsbeheizung bzw. zum schnellen Ankochen aus.

Die zyklische Erfassung der Temperaturänderung bzw. der Temperaturabweichung erfolgt in im Vergleich zur Dauer eines Kochvorgangs sehr kurzen Abständen, vorzugsweise innerhalb einer Periode einer Netzwechselspannung, so daß beispielsweise alle 10 ms aktualisierte Werte für die Temperaturänderung bzw. die Temperaturabweichung vorliegen.

In einfacher Ausgestaltung der Erfindung genügt es, wenn die Matrix Regelwerte für positive und negative und keine Änderung der Isttemperatur und für positive und negative und keine Abweichung der Isttemperatur vom Sollwert beinhaltet. In bevorzugter Ausgestaltung der Erfindung beinhaltet die Matrix zwei oder mehrere für positive ("große" und "kleine") und negative ("große" und "kleine") zeitliche Änderungen der Isttemperatur und/oder der Abweichung der Isttemperatur vom Sollwert.

Die Leistungsreglung paßt sich - wie beschrieben - von selbst dem momentanen aktuellen Temperaturverlauf der Kochstelle an. Der Benutzer trifft lediglich eine Vorwahl. Somit kann der Fall auftreten, daß die vom Benutzer vorgenommene Einstellung des Vorwählers, die üblicherweise nach Zahlen "1" bis "3" bzw. "1" bis "15" erfolgt, höher ist als die im Einzelfall tatsächlich eingeschaltete Leistung. In Ausgestaltung der Erfindung kann dies dem Benutzer optisch oder akustisch angezeigt werden, so daß er den Vorwähler entsprechend zurückdrehen kann.

Aufgrund der selbsttätigen Leistungsanpassung kann in Weiterbildung der Erfindung der Vorwähler so gestaltet sein, daß er nach verbalen Begriffen, wie "Wärmen", "Kochen", "Schmoren", "Braten" stellbar ist. Dies erleichtert dem Benutzer das Einstellen des Vorwählers, weil er damit eine einfache gedankliche Verbindung zum gewünschten Vorgang hat.

Nach dem Stand der Technik ist bei Strahlungsbeheizungen eine Restwärmeanzeige vorgesehen, die den Benutzer vor dem Berühren eines noch heißen Kochfeldes nach dessen Abschalten warnt. In Ausgestaltung der Erfindung kann diese Warnanzeige schon dann aufleuchten, wenn der Vorwähler eingeschaltet und eine Isttemperatur über der Verbrennungstemperatur erreicht ist. Hierfür wird die Anzeige über einen entsprechenden Matrixwert angesteuert.

Weitere vorteilhafte Ausgestaltungen der Erfindung ergeben sich aus den Unteransprüchen und der folgenden Beschreibung eines Ausführungsbeispiels. In der Zeichnung zeigen:
Figur 1 ein Blockschaltbild einer Leistungs-Regeleinrichtung einer Strahlungsbeheizung,
Figur 2 ein Temperatur-Zeitdiagramm und
Figur 3 ein anderes Temperatur-Zeitdiagramm.

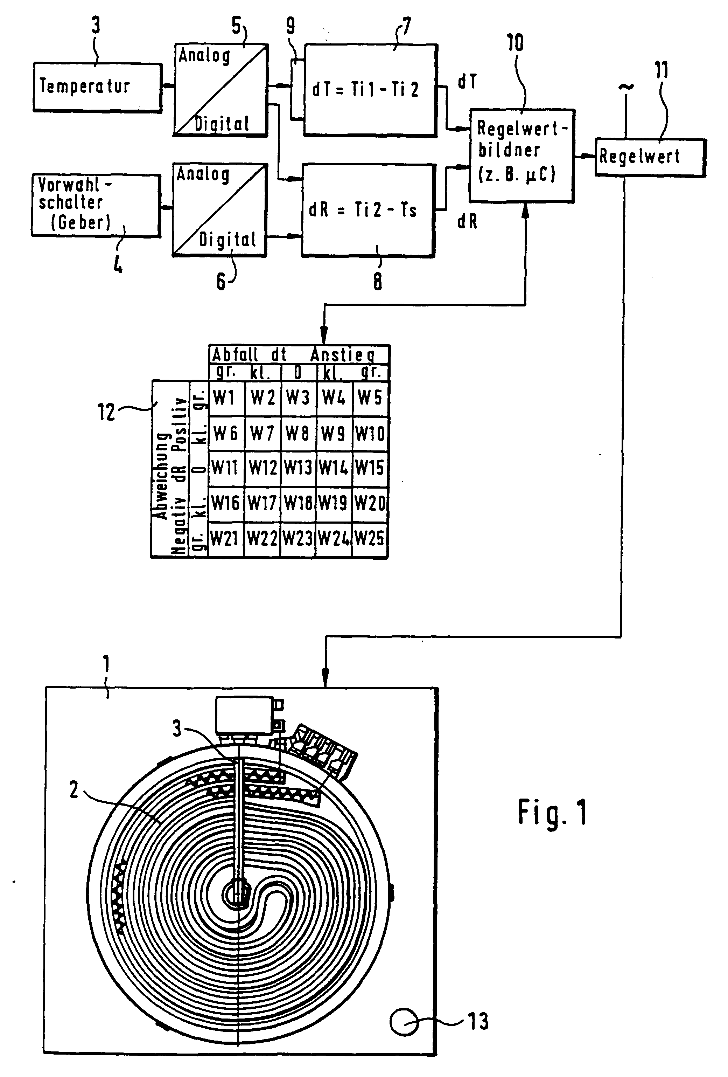

Ein elektrischer Kochherd weist eine Glaskeramikplatte mit mehreren Kochfeldern auf, von denen in Fig.1 eines(1) gezeigt ist. Jedem Kochfeld(1) ist eine Strahlungsbeheizung(2) zugeordnet, die beispielsweise von einem spiralförmig verlegten, gewendelten Heizwiderstandsdraht gebildet ist. Zwischen dem Kochfeld (1) der Glaskeramikplatte und der Strahlungsbeheizung(2) ist ein Temperaturfühler(3) angeordnet, der auch die Temperatur des Kochfeldes(1) erfaßt. Der Temperaturfühler (3) ist ein Ausdehnungsfühler oder elektrischer Temperaturfühler, beispielsweise Thermoelement oder Halbleiterfühler, beispielsweise Platin-Element. Am Herd ist ein Vorwähler(4) vorgesehen, der vom Benutzer nach Zahlenwerten oder nach auf den Kochvorgang bezogenen Begriffen, wie "Wärmen", "Kochen", "Schmoren", "Braten" in Stufen einstellbar ist, wobei letztlich die Einstellung einem Temperatursollwert(Ts) entspricht.

Dem die jeweilige Isttemperatur(Ti) erfassenden Temperaturfühler(3) und dem Vorwähler(4) sind Analog-Digitalwandler(5 bzw. 6) nachgeschaltet. Über den Digitalwandler(5) wird die jeweilige Isttemperatur(Ti) an einen Differenzwertbilder(7) und einen Differenzwertbilder(8) gelegt. Am Differenzwertbilder(7) liegt über einen Zwischenspeicher auch die jeweils kurz vor der Erfassung der aktuellen Isttemperatur(Ti2) herrschende Temperatur (Ti1). Der Differenzwertbilder(7) ermittelt den der jeweiligen Temperaturänderung entsprechenden Wert dT = Ti1 - Ti2. Dieser Wert ist als Eingangsgröße einem Regelwertbildner, insbesondere einem Mikrocontroller(10) zugeführt. Die Bildung des Differenzwertes(dT) erfolgt jeweils innerhalb eines festen Zeitintervalls, vorzugsweise innerhalb einer Periode der Netzwechselspannung, beispielsweise innerhalb einer Halbwelle von 10 ms, so daß nach jeder Periode der Netzwechselspannung ein aktualisierter Wert für dT zur Verfügung steht. Im Hinblick der Trägheit der Strahlungsbeheizung können jedoch auch längere Zeiten für die Bildung des aktuellen Wertes der zeitigen Änderung der Isttemperatur(Ti) vorgesehen sein. Jedenfalls ist die zyklische Ermittlung der Temperaturänderung(dT) kürzer als sich im Kochbetrieb auswirkende Änderungen der Isttemperatur.

Der Differenzwertbilder(8) bildet die Differenz zwischen dem aktuellen Temperaturistwert(Ti2) und dem Temperatursollwert(Ts). Er bildet für den Mikrocontroller (10) die Eingangsgröße dR = Ti2 - Ts. Diese Größe kann in den gleichen Zeiten wie die Größe dT aktualisiert werden.

Mit dem Mikrocontroller(10) ist eine Steuerschaltung(11) steuerbar, welche die der Strahlungsbeheizung aus dem elektrischen Netz zugeführte Leistung, beispielsweise über einen Triac, einstellt.

Dem Mikrocontroller(10) ist ein nichtflüchtiger Speicher (12) zugeordnet, der in Form einer Matrix Regelwerte(W1 bis W25) für die Steuerschaltung(11) beinhaltet. Die Regelwerte(W1 bis W25) sind herstellerseitig entsprechend des jeweiligen Typs der Strahlungsbeheizung(2) eingegeben. Jeweils einer der Regelwerte(W1 bis W25) wird aus dem Speicher(12) vom Mikrocontroller(10) entsprechend der jeweils aktuellen Paarung der Eingangsgrößen dT,dR abgerufen. Für die Eingangsgröße dT sind in der Matrix Spalten für großen Temperaturabfall, kleinen Temperaturabfall, keinen Temperaturabfall, kleinen Temperaturanstieg, großen Temperaturanstieg vorgesehen. Für die Eingangsgröße dR sind in der Matrix Zeilen für große positive Temperaturabweichung, kleine Temperaturabweichung, keine Temperaturabweichung, kleine negative Temperaturabweichung, große negative Temperaturabweichung vorgesehen.

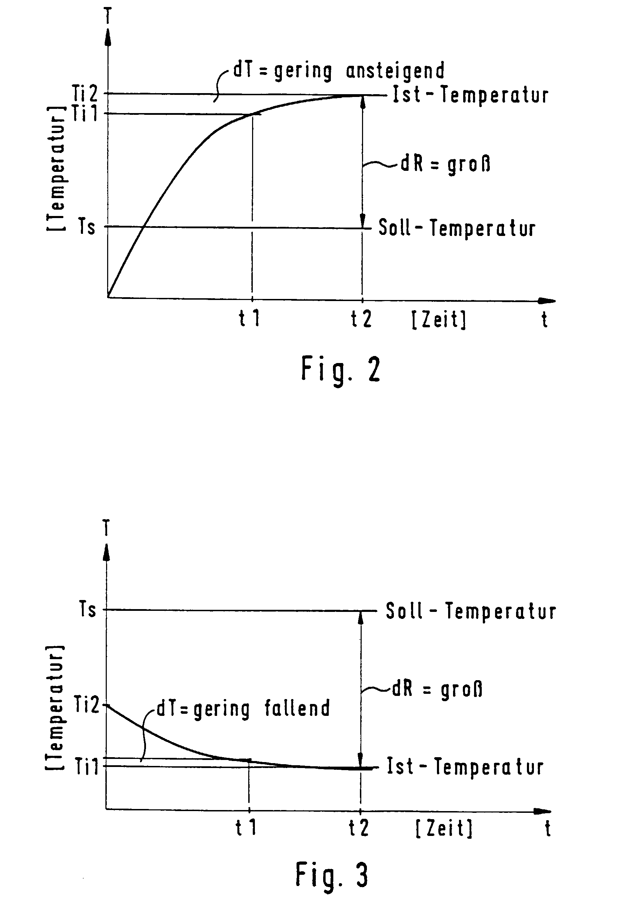

Entsprechend der aktuellen Temperaturänderung dT, d.h. des aktuellen Temperaturgradienten, und der jeweiligen Abweichung der Isttemperatur Ti von der über den Vorwähler(4) bestimmten Solltemperatur Ts wird immer innerhalb jeder Netzwechselperiode der entsprechende Regelwert an die Steuerschaltung(11) gelegt. Die Fig. 2 zeigt ein Beispiel hierfür.

Nach Fig. 2 ist der Temperaturanstieg der Isttemperatur Ti2 zum Zeitpunkt t2 klein gegenüber der Temperatur Ti1 zum Zeitpunkt t1; dT ist also klein. Die negative Abweichung der Solltemperatur Ts ist groß gegenüber der Isttemperatur zum Zeitpunkt t1 bzw. t2. Dementsprechend wird der Regelwert W24 abgerufen. Der Regelwert W24 führt zu einem Abschalten der Strahlungsbeheizung(2).

Bei gleichzeitigem Vorliegen von dR = 0 und dT = 0 wird der Regelwert W13 abgerufen. Dieser führt ebenfalls zur Abschaltung der Strahlungsbeheizung(2). Diese wird auch bei Abrufen der Regelwerte W14,W15,W18,W19,W20,W23,W25 abgeschaltet. Diese Werte können von Null abweichen, wenn eine besondere Abkühlcharakteristik gewünscht ist.

In Fig. 3 ist ein Temperaturabfall dargestellt. Zwischen den Zeitpunkten(t1,t2) ist der Temperaturabfall der Isttemperatur(Ti) klein; dT ist also gering fallend. Die positive Abweichung der Solltemperatur(Ts) ist groß gegenüber der Isttemperatur(Ti) zum Zeitpunkt(t1 bzw. t2). Dementsprechend wird der Regelwert(W2) abgerufen. Der Regelwert(W2) führt zu einem Einschalten der Strahlungsbeheizung(2).

Der größte Regelwert W1 für die Strahlungsbeheizung(2) wird abgerufen, wenn der Vorwähler(4) hochgestellt wird (große positive Abweichung) und ein großer Temperaturabfall vorliegt. Entsprechendes gilt für die weiteren Regelwerte. Die leistungsbezogene Staffelung der Regelwerte ist an die jeweiligen Strahlungsbeheizung herstellerseitig angepaßt. Hierbei können deren Qualität der Isolierung, Abstrahlverhalten und Leistungsdichte der Beheizung berücksichtigt werden. In den Zeilen W1 bis W5, W6 bis W10, W11 bis W12, W16 bis W17, W21 bis W22 wird jeweils ein bezüglich der Leistung höherer Regelwert abgerufen. Dies bedeutet jedoch nicht, daß der Regelwert W6 eine höhere Leistung abruft als der Regelwert W5. Entsprechendes gilt für die Regelwerte W10 und W11 bzw. W12 und W16 bzw. W17 und W21. In der Spalte W1 bis W21 bzw. W2 bis W22 bzw. W3 bis W8 bzw. W4 bis W9 und W5 bis W10 wird fortlaufend ein kleinerer Leistungswert abgerufen, weil diese Richtung eine Rückstellung des Vorwählers(4) gegenüber der Isttemperatur bedeutet.

In der Wertetabelle sind zur Vereinfachung der zeichnerischen Darstellung fünf Spalten bzw. Zeilen dargestellt. Zur Erhöhung der Feinheit der Auflösung können beliebig mehr Spalten bzw. Zeilen vorgesehen sein. Nach der Fuzzy-Technik führt die dargestellte Wertetabelle zu einer Zugehörigkeitsfunktion, in der die einzelnen Spalten bzw. Zeilen durch Variable ersetzt werden. Es ist dann auch eine Auswertung dahingehend möglich, ob ein Wert zwischen zwei Spalten bzw. Zeilen liegt, oder je nach Gewichtung zu Spalten bzw. Zeilen gehört.

Die Funktionen der Differenzwertbilder(7,8), des Zwischenspeichers(9) und des Mikrocontrollers(10) können in einem Mikroprozessor integriert sein, der ggf. auch die Funktion der Wandler(5,6) übernimmt.

Am Kochfeld(1) ist eine optische Anzeige(13) vorgesehen. Diese wird von dem Mikrocontroller(10) angesteuert, wenn der Vorwähler(4) eingeschaltet ist, und bleibt - auch beim Abschalten des Vorwählers - eingeschaltet, solange eine Isttemperatur Ti herrscht, die größer als eine Verbrennungstemperatur ist, bei der sich der Benutzer bei Berührungen des Kochfeldes(1) Verbrennungen zuziehen kann.

Die beschriebene Leistungs-Regeleinrichtung kann auch einen zusätzlichen Sicherheitstemperaturbegrenzer ersetzen, in dem sie bei Erreichen einer oberen Grenztemperatur in jedem Fall abschaltet. Hierfür wird der Absolutwert der Isttemperatur(Ti) ausgewertet. Liegt dieser über einer vorgegebenen Temperaturschwelle (Sicherheitstemperatur), dann wird unabhängig vom Regelwert(W1...W25) der Wert Null als Regelwert ausgegeben und damit die Strahlungsbeheizung abgeschaltet.

## Patentansprüche

1. Leistungs-Regeleinrichtung für eine Strahlungsbeheizung mit einem die Temperatur eines Kochfeldes erfassenden Temperaturfühler und einem Vorwähler,
dadurch gekennzeichnet,
daß ein Mikrocontroller(10) einerseits die zeitliche Änderung(dT) der Isttemperatur(Ti) des Kochfeldes(1) zyklisch als erste Eingangsgröße erfaßt, daß der Mikrocontroller(10) andererseits die Abweichung(dR) der jeweiligen Isttemperatur(Ti) vom Solltwert des Vorwählers(4) zyklisch als zweite Eingangsgröße erfaßt und daß dem Mikrocontroller(10) in einem Speicher (12) eine Wertematrix zugeordnet ist, die für die möglichen Paare der ersten und zweiten Eingangsgröße(dT, dR) Regelwerte(W1 bis W25) beinhaltet, und daß der Mikrocontroller(10) bei dem jeweils vorliegenden Eingangsgrößenpaar(dT,dR) aus der Wertematrix den betreffenden Regelwert übernimmt und mit ihm die Leistung der Strahlungsbeheizung(2) steuert.

2. Leistungs-Regeleinrichtung nach Anspruch 1,
dadurch gekennzeichnet,
daß die Matrix des Speichers(12) Regelwerte(W1 bis W25) für positive und negative und keine Änderungen der Isttemperatur(Ti) und für positive und negative und keine Abweichung der Isttemperatur(Ti) vom Sollwert(Ts) beinhaltet.

3. Leistungs-Regeleinrichtung nach Anspruch 2,
dadurch gekennzeichnet,
daß die Matrix zwei oder mehrere Regelwerte für positive "groß" und "klein" und negative "groß" und "klein" zeitliche Änderungen(dT) der Isttemperatur(Ti) und/oder der Abweichung(dR) der Isttemperatur vom Sollwert beinhaltet.

4. Leistungs-Regeleinrichtung nach einem der vorhergehenden Ansprüche,
dadurch gekennzeichnet,
daß die zyklische Erfassung der Temperaturen(Ti1,Ti2,Ts) innerhalb einer Periode der Netzwechselspannung erfolgt.

5. Leistungs-Regeleinrichtung nach einem der vorhergehenden Ansprüche,
dadurch gekennzeichnet,
daß eine Anzeige vorgesehen ist, die dem Benutzer anzeigt, wann der Mikrocontroller(10) einen Regelwert abruft, der kleiner als der am Vorwähler(4) eingestellte Sollwert ist.

6. Leistungs-Regeleinrichtung nach einem der vorhergehenden Ansprüche,
dadurch gekennzeichnet,
daß der Vorwähler(4) nach verbalen Begriffen, wie "Wärmen", "Kochen", "Schmoren", "Braten" stellbar ist.

7. Leistungs-Regeleinrichtung nach einem der vorhergehenden Ansprüche,
dadurch gekennzeichnet,
daß über einen Matrixwert eine Warnanzeige erfolgt, wenn der Vorwähler(4) eingeschaltet ist und eine über einer Verbrennungstemperatur liegende Isttemperatur auftritt.

8. Leistungs-Regeleinrichtung nach einem der vorhergehenden Ansprüche,
dadurch gekennzeichnet,
daß sie die Funktion eines Sicherheitstemperaturbegrenzers übernimmt.

## Claims

1. Power regulating device for radiant heating having a temperature sensor, which registers the temperature of a cooking zone, and a preselector,
characterized in that
on the one hand a microcontroller (10) cyclically registers the variation per unit of time (dT) of the actual temperature (Ti) of the cooking zone (1) as first input quantity;
on the other hand the microcontroller (10) cyclically registers the difference (dR) between the respective actual temperature (Ti) and the desired value of the preselector (4) as second input quantity; and,
in a memory (12), a value matrix is associated with the microcontroller (10), this value matrix comprising regulating values (W1 to W25) for the possible pairs of the first and second input quantities (dT, dR); and, in the case of the currently existing pair of input quantities (dT, dR), the microcontroller (10) receives the appropriate regulating value from the value matrix and with it controls the power of the radiant heating (2).

2. Power regulating device according to Claim 1,
characterized in that
the matrix of the memory (12) comprises regulating values (W1 to W25) for positive and negative and no variations of the actual temperature (Ti) and for positive and negative and no difference between the actual temperature (Ti) and the desired value (Ts).

3. Power regulating device according to Claim 2,
characterized in that
the matrix comprises two or more regulating values for positive "large" and "small" and negative "large" and "small" variations per unit of time (dT) of the actual temperature (Ti) and/or of the difference (dR) between the actual temperature and the desired value.

4. Power regulating device according to one of the preceding claims,
characterized in that
the cyclical registration of the temperatures (Til, Ti2, Ts) occurs within one cycle of the mains alternating-current voltage.

5. Power regulating device according to one of the preceding claims,
characterized in that
a display is provided which indicates to the user when the microcontroller (10) calls up a regulating value which is less than the desired value set at the preselector (4).

6. Power regulating device according to one of the preceding claims,
characterized in that
the preselector (4) can be set according to verbal terms, such as "Heat", "Boil", "Braise", "Fry".

7. Power regulating device according to one of the preceding claims,
characterized in that
a warning is displayed by way of a matrix value when the preselector (4) is switched on and an actual temperature occurs which is above a burning temperature.

8. Power regulating device according to one of the preceding claims,
characterized in that
it takes over the function of a safety temperature limiter.

## Revendications

1. Dispositif de régulation de puissance pour un chauffage radiant comportant une sonde de température détectant la température d'une zone de cuisson, ainsi qu'un présélecteur, caractérisé
en ce qu'un microcontrôleur (10) enregistre cycliquement d'une part la variation dans le temps (dT) de la température réelle (Ti) de la zone de cuisson (1) en tant que première grandeur d'entrée, en ce que le microcontrôleur (10) enregistre d'autre part cycliquement l'écart (dR) entre la température réelle (Ti) et la valeur de consigne du présélecteur (4) en tant que deuxième grandeur d'entrée, et en ce qu'au microcontrôleur (10) est associée, dans une mémoire (12), une matrice de valeurs qui contient une valeur de régulation (Wl à W25) pour les paires possibles de la première et de la deuxième grandeur d'entrée (dT, dR), et en ce que pour chaque paire de grandeurs d'entrée (dT, dR) présentes, le microcontrôleur (10) reprend dans la matrice de valeurs la valeur de régulation concernée et commande avec celle-ci la puissance du chauffage radiant (2).

2. Dispositif de régulation de puissance selon la revendication 1, caractérisé
en ce que la matrice de la mémoire (12) contient des valeurs de régulation (Wl à W25) pour les variations positives et négatives et pour aucune variation de la température réelle (Ti), ainsi que pour les écarts positifs et négatifs et pour aucun écart de la température réelle (Ti) par rapport à la valeur de consigne (Ts).

3. Dispositif de régulation de puissance selon la revendication 2, caractérisé
en ce que la matrice contient deux valeurs de régulation ou plus pour des variations temporelles (dT) positives « grand » et « petit » et négatives « grand » et « petit » de la température réelle (Ti) et/ou de l'écart (dR) de la température réelle par rapport à la valeur de consigne.

4. Dispositif de régulation de puissance selon l'une des revendications précédentes, caractérisé
en ce que l'enregistrement cyclique des températures (Ti1, Ti2, Tis) s'effectue à l'intérieur d'une période de la tension alternative du réseau.

5. Dispositif de régulation de puissance selon l'une des revendications précédentes, caractérisé
en ce qu'il est prévu un affichage qui indique à l'utilisateur à quel moment le microcontrôleur (10) appelle une valeur de régulation qui est inférieure à la valeur de consigne sélectionnée sur le présélecteur (4).

6. Dispositif de régulation de puissance selon l'une des revendications précédentes, caractérisé
en ce que le présélecteur (4) peut être réglé suivant des notions verbales telles que « chauffer », « cuire », « mijoter », « rôtir ».

7. Dispositif de régulation de puissance selon l'une des revendications précédentes, caractérisé
en ce qu'un avertissement s'effectue par une valeur de matrice lorsque le présélecteur (4) est enclenché et qu'il se produit une température réelle supérieure à une température de brûlure.

8. Dispositif de régulation de puissance selon l'une des revendications précédentes, caractérisé
en ce qu'il assure la fonction d'un dispositif limiteur de température et de sécurité.
